# EUROPÄISCHE PATENTANMELDUNG

(11) **EP 3 155 938 A1**
(43) Veröffentlichungstag der Anmeldung: **19.04.2017**
(21) Anmeldenummer: 16193328.8
(22) Anmeldetag: 11.10.2016
(51) Int. Cl.: A47J 37/07

(54) **VORRICHTUNG ZUM KOCHEN UND/ODER GRILLEN**

(30) Priorität: 12.10.2015 DE 102015219679; 28.10.2015 DE 102015221099
(71) Anmelder: LotusGrill GmbH, 67117 Limburgerhof (DE)
(72) Erfinder: Ohler, Hans, 67117 Limburgerhof (DE); Ohler, Mischa, 67166 Otterstadt (DE); Paakkanen, Harri, 69126 Heidelberg (DE)
(74) Vertreter: Patent- und Rechtsanwälte Ullrich & Naumann

(57) **Zusammenfassung**

Die Erfindung betrifft eine Vorrichtung zum Kochen und/oder Grillen von Lebensmitteln mit einem Gehäuse, einer in dem Gehäuse angeordneten Brennkammer, einem oberhalb der Brennkammer angeordneten Einsatz, wobei der Einsatz ein durch eine äußere Wand und einen zentralen, vorzugsweise nach oben offenen Schacht gebildetes ringförmiges Becken zur Aufnahme von Flüssigkeit und einen vorzugsweise abnehmbaren, oberhalb des Schachts angeordneten Grillaufsatz aufweist.

## Beschreibung

Die vorliegende Erfindung betrifft eine Vorrichtung zum Kochen und/oder Grillen von Lebensmitteln jeglicher Art. Ganz allgemein beschäftigt sich die Erfindung mit einer Vorrichtung zum Kochen und/oder Grillen, die aufgrund ihrer besonderen Konstruktion und Ausstattung insbesondere zur Verwendung auf dem Tisch geeignet ist.

Aus der Praxis sind Vorrichtungen bekannt, mit denen man entweder Kochen oder Grillen kann.

Lediglich beispielhaft seien Fonduegeräte genannt. Hierbei ist wesentlich, dass sie unterhalb des Topfes eine mit Anzündpaste befüllte Schale aufweisen, wobei der Schale ein öffenbarer Deckel angeordnet ist, und im geöffneten Zustand des Deckels die aus der Schale kommende Flamme den Fonduetopf direkt beheizt. Dies ist in mehrerlei Hinsicht problematisch. Eine Wärmeabstrahlung erfolgt zum Einen nach oben, nämlich durch die besagte Öffnung hindurch. Zum Anderen erfolgt eine Wärmeabstrahlung auch zu allen anderen Seiten hin, da die Schalen im Allgemeinen äußerst filigran ausgestaltet sind. Hier besteht die Gefahr sich zu verbrennen. Außerdem drohen häufig Bauteile der Fonduegeräte, insbesondere im Bereich der die Brennpaste aufnehmenden Schale, aufgrund der filigranen Ausgestaltung, insbesondere nach mehreren Heizzyklen zu brechen bzw. spröde zu werden. Schließlich sind bekannte Fonduegeräte aufgrund ihrer spezifischen Konstruktion nicht zum Transport im zusammengebauten Zustand geeignet, geschweige denn mit befülltem Fonduetopf, zumal die Bauteile meist nur aufeinander gelegt sind.

Aus der WO 2014/094745 ist ein Tischgrill mit einem Gehäuse, einer Holzkohlekammer und einem oberhalb der Holzkohlekammer angeordneten Grillrost bekannt. Problematisch an dieser Vorrichtung ist es, dass sie ausschließlich auf das Grillen von Lebensmitteln beschränkt ist. Insbesondere äußerst gesundheitsbewussten Personen reicht ein Grill für eine ausgewogene Ernährung nicht aus.

Im Lichte der voranstehenden Ausführungen liegt der Erfindung die Aufgabe zugrunde, eine Vorrichtung zu realisieren, mit der bei einfachster Konstruktion und gefahrloser Handhabung sowohl Kochen als auch alternativ oder zusätzlich Grillen von Lebensmitteln möglich ist.
Voranstehende Aufgabe ist erfindungsgemäß durch die Merkmale des Anspruchs 1 gelöst. Danach weist die Vorrichtung zum Kochen und/oder Grillen von Lebensmitteln ein Gehäuse, eine in dem Gehäuse angeordnete Brennkammer und einen oberhalb der Brennkammer angeordneten Einsatz auf, der ein durch eine äußere Wand und einen zentralen, vorzugsweise nach oben offenen Schacht gebildetes ringförmiges Becken zur Aufnahme von Flüssigkeit und einen vorzugsweise abnehmbaren Grillaufsatz oberhalb des Schachtes aufweist.

Erfindungsgemäß ist erkannt worden, dass es von besonderem Vorteil ist, die Beheizung einer Vorrichtung zum Kochen und/oder Grillen mittels einer in einem Gehäuse angeordneten Brennkammer zu realisieren. Einer Verletzungsgefahr kann damit entgegengewirkt werden. Die erfindungsgemäße Vorrichtung geht im Gegensatz zu den aus der Praxis bekannten Vorrichtungen einen völlig anderen Weg und kombiniert das Kochen und Grillen durch einen Einsatz, der in ein durch eine äußere Wand und einen zentralen, vorzugsweise nach oben offenen Schacht gebildetes ringförmiges Becken zur Aufnahme von Flüssigkeiten und anderen Lebensmitteln und einen vorzugsweise abnehmbaren Grillaufsatz oberhalb des Schachtes aufweist. In dem Becken können beispielsweise Suppen oder Brühen aus Gemüse gekocht werden, wobei das Gemüse - zusammen mit Wasser - in dem Becken gekocht wird. Die aus der Brennkammer gelangende Wärme bestrahlt somit sowohl das ringförmige Becken sowie durch den Schacht hindurch den Grillaufsatz. Durch die Verwendung einer Brennkammer ist kein elektrischer Strom erforderlich und kann die erfindungsgemäße Vorrichtung auch ohne Stromversorgung, beispielsweise bei einem Picknick oder im Garten auf dem Tisch, verwendet werden. Das Kochen und das Grillen können simultan oder alternativ durchgeführt werden. Wichtig ist dabei, dass lediglich eine Brennkammer für beide Vorgänge notwendig ist.

Folglich ist mit der erfindungsgemäßen Vorrichtung eine Vorrichtung zum Kochen und/oder Grillen von Lebensmitteln realisiert, mit der bei einfachster Konstruktion und gefahrloser Handhabung sowohl Kochen als auch alternativ oder zusätzlich Grillen von Lebensmitteln ermöglicht wird.

In vorteilhafter Weise ist eine Trägerschale innerhalb des Gehäuses allseitig mit Abstand zum Gehäuse angeordnet, wobei die Brennkammer wiederum in der Trägerschale angeordnet ist. Die Nutzung einer Trägerschale im Innenraum des Gehäuses realisiert zum Einen eine Trennung zwischen Brennkammer und Gehäuse, so dass von der Brennkammer abstrahlende Wärme nicht direkt an das Gehäuse gelangt und dieses erwärmt. Zum Anderen kann die Trägerschale dazu dienen, heruntertropfende Flüssigkeiten und/oder Lebensmittel aufzufangen und ein Verschmutzen des Gehäuses zu vermeiden. Die Trägerschale vorzugsweise aus Edelstahl lässt sich einfach aus dem Gehäuse entnehmen und kann in einer Spülmaschine gereinigt werden, wie auch vorzugsweise die anderen Bestandteile der Vorrichtung.

Des Weiteren werden voranstehende Vorteile einer Trägerschale dadurch begünstigt, dass die Trägerschale vorzugsweise mit einem zumindest teilweise umlaufenden Randbereich in das Gehäuse eingehängt ist. Auf diese Weise gelangen Lebensmittel oder Flüssigkeit aus dem Einsatz in das Gehäuse. Ebenfalls möglich ist es, dass der Bodenbereich der Trägerschale zu einem äußeren Randbereich abfällt und dort einen Sammelbereich für tropfendes Fett oder andere Flüssigkeiten und/oder Lebensmittel bildet.

In vorteilhafter Weise ist die Brennkammer als vorzugsweise zylindrisch ausgeführte Holzkohlekammer oder als Gaskammer ausgeführt. Eine zylindrische Ausgestaltung einer Holzkohlekammer hat den Vorteil, dass diese die Wärme einerseits nach oben und andererseits durch deren Wandung hindurch zur Seite hin abstrahlt. Des Weiteren ist es denkbar, dass die Brennkammer, insbesondere die Holzkohlekammer, einen abnehmbaren Deckel aufweist. Eine Wärmestrahlung nach oben kann ganz besonders dadurch begünstigt sein, dass der abnehmbare Deckel in seiner Fläche gelocht ist, wobei die Lochung gerade so groß ausgeführt sein kann, dass Wärmestrahlung ungehindert durch die Lochung hindurch treten kann, jedoch die Glut im Inneren der Holzkohlekammer verbleibt, auch für den Fall, dass die Vorrichtung unsachgerecht gekippt wird oder sogar umfällt. Insoweit ist es von besonderem Vorteil, wenn der abnehmbare Deckel in seiner die Holzkohlekammer schließenden Position, d.h. auf den oberen Rand der Holzkohlekammer aufgesetzt, durch mechanische Mittel fixiert ist.

Denkbar ist es auch, dass die Lochung des Deckels vorzugsweise identische Durchgänge, bspw. mit einem Durchmesser im Bereich von 3 mm bis 9 mm, vorzugsweise mit einem Durchmesser von 6 mm aufweist. Durch diese Maßnahmen kann hinreichend viel Wärmestrahlung nach oben austreten, kann jedoch der ungewollte Austritt von glühenden Bestandteilen der Holzkohle wirksam vermieden werden, auch für den Fall, dass die gesamte Vorrichtung mit der Holzkohlekammer gekippt wird.

Weiterhin ist es denkbar, dass die Lochung mindestens zwei kreisringförmig angeordnete Lochgruppen umfasst, wobei die so gebildeten Kreisringe koaxial zueinander angeordnet sein können.

Der Deckel kann mindesten zwei Flächen mit unterschiedlichem axialem Abstand zum Deckelrand aufweisen, wobei den unterschiedlichen Flächen die jeweilige Lochgruppe zugeordnet ist. Entsprechend befindet sich in jeder Ebene des Deckels eine Lochgruppe, wobei die Löcher bzw. Durchgänge äquidistant zueinander ausgebildet sein können.

Im Konkreten kann der Deckel zwischen den Flächen und ggf. an seinem Randbereich nach unten abgewinkelte bzw. geneigte Übergangsflächen aufweisen, entlang derer auf den Deckel tropfendes Fett oder andere Flüssigkeiten oder Lebensmittel zur Seite hin nach unten ablaufen können. Dadurch ist in Bezug auf die zu vermeidende Verbrennung, insbesondere von Fett, eine wirksame Barriere geschaffen, wobei weitere Maßnahmen später noch erläutert werden.

Der Deckel kann derart ausgestaltet und dimensioniert sein, dass er mit seinem Randbereich die Holzkohlekammer in deren oberen Bereich übergreift bzw. umschließt. Es kann sich bei dem Deckel um eine Art Stülpdeckel handeln, wobei der Deckel auf deren oberen Rand der Holzkohlekammer aufdrückbar oder aufpressbar ausgeführt sein kann. Auch ein Einrasten wäre bei wulstartiger Ausgestaltung des oberen Randbereichs der Holzkohlekammer und bei entsprechender Ausgestaltung des übergreifenden Randes des Deckels denkbar.

Des Weiteren ist es denkbar, dass der Deckel einen oberen, vorzugsweise auch als Henkel dienenden Klemmbügel mit einer zumindest gewissen Elastizität, der zum Klemmen und Festlegen der geschlossenen Holzkohlekammer zwischen dem Bodenbereich der Trägerschale und dem Einsatz dient.

Mit anderen Worten wird durch Aufsetzen bzw. Festlegen des Einsatzes und/oder des Grillaufsatzes die Holzkohlekammer festgelegt, wobei dem Klemmbügel eine spannende Funktion zukommen kann. Durch diese Maßnahme kann die Holzkohlekammer im geschlossenen Zustand gesichert sein, so dass ein unbeabsichtigtes Herausfallen glühender Holzkohle auch dann ausgeschlossen ist, wenn die gesamte Vorrichtung kippt. Ein hohes Maß an Sicherheit kann so realisiert werden.

Zur abermaligen Begünstigung des Wirkungsgrades der als Brennkammer dienenden Holzkohlekammer ist der Boden der Holzkohlekammer gelocht, so dass diese von unten her über eine Anzündhilfe befeuert werden und nach der Befeuerung ziehen kann. Auch diese Lochung kann mindestens zwei kreisringförmig angeordnete Lochgruppen umfassen, ähnlich wie bei dem Deckel. Die so gebildeten Kreisringe können ebenso koaxial zueinander angeordnet sein. Aufgrund dieser Maßnahme kann die Holzkohlekammer in idealer Weise auch zum Anfeuern der Holzkohle geeignet sein, zumal von unterhalb der Holzkohlekammer ein Anzünden mittels Anzündhilfe möglich ist. Jedenfalls dient die Lochung im Bodenbereich der Holzkohlekammer einerseits zum Anzünden der in der Holzkohlekammer befindlichen Holzkohle und andererseits zur Luftversorgung des Innenraums der Holzkohlekammer.

In konstruktiver Hinsicht ist es in Bezug auf die Holzkohlekammer von Vorteil, wenn der Boden gegenüber einem über den Boden hinausragenden freien Rand zumindest geringfügig nach innen verlagert ist, und wenn der Rand mit einem umlaufenden, nach außen abragenden Flansch, einer Auskragung, etc. endet. Durch diese Maßnahme kommt die Holzkohlekammer nicht etwa mit dem Bodenbereich unmittelbar auf einer Unterlage zum Stehen, steht vielmehr mit dem freien Rand auf der Unterlage, und zwar unter Bildung eines als Anzündraum dienenden Raums zwischen der Unterlage und dem Bodenbereich.

Zur Stabilisierung des die Holzkammer bildenden Körpers ist der untere und/oder obere Rand der Holzkohlekammer durch Falzen, Börteln, etc. verstärkt. Auch ist es denkbar, dass die Randbereiche einen angeformten, verstärkten Metallrand aufweisen.

Die Wandung der Holzkohlekammer sollte ebenso zur hinreichend guten Abstrahlung von Wärme geeignet sein. Dazu kann die Wandung als umlaufendes, vorzugsweise feinmaschiges Sieb ausgeführt sein, so dass eine allseitige Wärmestrahlung nahezu ungehindert möglich ist. Dabei sollte es sich um ein qualitativ hochwertiges Sieb aus Edelstahl handeln, welches für hinreichend langen Gebrauch geeignet ist.

Die Wandung der Holzkohlekammer kann ebenso aus Edelstahlblech gefertigt sein, wobei das Edelstahlblech zur Begünstigung der allseitigen Abstrahlung geschlitzt und/oder gelocht sein kann. Im Falle von Schlitzen können diese vertikal ausgerichtet sein oder von einer vertikalen Ausrichtung abweichen.

In vorteilhafter Weise hat die Wandung der Holzkohlekammer bei vertikalen oder schrägen Schlitzen parallel zueinander ausgebildete Schlitze, die sich zwischen einem durchgehenden bodenseitigen Rand der Kammer und einem durchgehenden deckelseitigen Rand der Kammer erstrecken. Die Schlitze können von der axialen Ausrichtung abweichen und verlaufen beispielsweise unter einem Winkel schräg zur Achse. Wesentlich ist jedenfalls, dass die Schlitze gerade so breit ausgelegt sind, dass es zur optimalen Wärmeabstrahlung reicht, wobei sie so schmal sein sollen, dass weder Glut noch Funkenflug durch die Schlitze hindurch nach außen gelangt.

Alternativ kann die Wand aus mehreren Wandelementen bzw. Segmenten bestehen, die versetzt zueinander angeordnet sind und dabei die Wand der Holzkohlekammer bilden. Dabei können sich die Wandelemente zumindest geringfügig überlappen, so dass jeweils zwischen den sich überlappenden Wandelementen ein axial verlaufender Schlitz, besser gesagt eine Art Teilringfläche, gebildet ist. Je nach Grad der Überlappung ist dabei wirksam verhindert, dass Glut bzw. Funkenflug nach außen gelangt. Die Schlitze können nach Bedarf ausgebildet sein, wobei eine Schlitzbreite im Bereich von 1 mm bis 3 mm von Vorteil ist. Die Schlitze sind vorzugsweise stanztechnisch hergestellt. Die Wand der Holzkohlekammer ist dabei derart gebogen, dass die durch Stanzen entstandenen Stülpungen nach innen gerichtet sind und dabei kleine Ränder bilden, die abermals den Funkenflug nach außen verhindern.

In Bezug auf die hohle Holzkohlekammer sei zusammenfassend festgehalten, dass diese in ganz besonders vorteilhafter Weise über eine umlaufende Wandung verfügt, wobei der mit der umlaufenden Wandung fest verbundene Bodenbereich nach innen in die Holzkohlekammer hineinragen kann und nach unten einen Raum definiert. Außerdem kann der Bodenbereich der Holzkohlekammer gelocht sein, so dass eine darunter angeordnete Anzündhilfe in die Holzkohlekammer hineinwirken kann. Obendrein ist die Luftströmung in die Holzkohlekammer hinein begünstigt.

Ähnlich verhält es sich mit dem Deckel, der zwar die Holzkohlekammer sicher abschließen kann, jedoch aufgrund der dort vorgesehenen Lochung in idealer Weise eine nahezu freie Wärmeabstrahlung nach oben zulässt. Durch die Summe aller die Holzkohlekammer betreffenden Maßnahmen kann der Wirkungsgrad begünstigt sein.

Wird die Holzkohlekammer auf eine Unterlage gestellt, wobei es sich dabei in vorteilhafter Weise um eine Anzündschale handelt, auf der die Holzkohlekammer mit ihrem unteren Rand steht. Der Raum zwischen dem Boden der Anzündschale und dem nach innen versetzten Boden der Holzkohlekammer kann zum Beladen mit einer vorzugsweise pastösen Anzündhilfe, die im eingesetzten Zustand der Anzündschale in der Trägerschale entzündet wird. Danach wird die Holzkohlekammer auf bzw. in die Anzündschale gestellt und dort entsprechend der zuvor beschriebenen Klemmung festgelegt.

Zur idealen Positionierung der Anzündschale umfasst diese mindestens drei nach unten abragende Stellfüße, mit denen sie auf dem Boden der Trägerschale steht. Andere Positioniermechanismen sind realisierbar.

Zur Begünstigung bzw. Sicherung einer geeigneten Luftströmung ist im Bodenbereich der Anzündschale, vorzugsweise mittig, ein Lufteinlass zum Einleiten der von der Luftversorgungseinrichtung kommenden Luft vorgesehen. Der Lufteinlass ragt vorzugsweise mittels eines vom Bodenbereich nach oben abragenden Flansches, Rands oder dergleichen in die Anzündschale hinein, so dass von dort aus ein Hineingleiten einer pastösen Anzündhilfe in Richtung der Luftversorgungseinrichtung wirksam verhindert ist.

Das Gehäuse ist in seinem unteren Bereich in vorteilhafter Weise mit einem Innenboden ausgestaltet, der in das Gehäuse eingeschweißt sein kann. Die Luftversorgungseinrichtung kann ein Lufteinlassrohr umfassen, welches sich von unterhalb des Innenbodens durch diesen hindurch oder mit diesem integral ausgebildet durch die Trägerschale und durch den Boden der Anzündhilfe hindurch in den Bereich der Anzündhilfe hinein erstreckt. Auf das Lufteinlassrohr kann die Trägerschale und die Anzündschale aufgeschoben bzw. aufgesteckt sein, so dass das Lufteinlassrohr gleichzeitig zur eindeutigen Positionierung der Trägerschale und der Anzündschale dienen kann.

Unterhalb des Innenbodens, nahe des Einlasses des Lufteinlassrohres kann ein Ventilator bzw. ein Gebläse angeordnet sein. der Ventilator bläst geregelt Luft in das Lufteinlassrohr, je nach Bedarf bzw. je nach Einstellung.

Bei dem Ventilator kann es sich um ein miniaturisiertes Aggregat mit äußerst geringem Stromverbrauch handeln, ähnlich oder identisch dem Ventilator im Gehäuse eines Computers. Außerdem kann der Ventilator nahezu geräuschlos arbeiten.

In ganz besonders vorteilhafter Weise ist eine Regelung für den Betrieb des Ventilators vorgesehen, die den Ventilator bei Erreichen einer vorzugsweise oberhalb des Grillrosts detektierbaren Betriebstemperatur herunterregelt.

Unterhalb des Innenbodens des Gehäuses kann ein Schalter, ein Regler und ein Batteriefach mit mindestens einer Batterie oder einem Akku zur Stromversorgung für das Gebläse angeordnet sein. Der Schalter und der Regler sitzen in vorteilhafter Weise zur Betätigung von außen in der Gehäusewand. Das Batteriefach ist von außenhalb des Gehäuses zugänglich, vorzugsweise von unterhalb des Gehäuses über eine dort vorgesehene Klappe.

Zur Begünstigung der Luftströmung über die Anzündschale in die Holzkohlekammer hinein weist das Gehäuse im Bereich unterhalb des Innenbodens zur Luftzufuhr dienende Öffnungen, vorzugsweise in Form dekorativer Durchgänge, bspw. in Form schlitzartiger Öffnungen, auf. Bei entsprechender Positionierung des Ventilators wird von außerhalb des Gehäuses Luft angesaugt und in den Lufteinlass bzw. in das Lufteinlassrohr bis in die Holzkohlekammer hinein geblasen. Der Lufteinlass kann Teil bzw. integrierter Bestandteil eines Ventilatorgehäuses sein.

Auch ist es denkbar, dass das Gehäuse im Bereich oberhalb des Innenbodens zur Kühlung im Bereich zwischen dem Gehäuse und der Trägerschale dienende Öffnungen, vorzugsweise in Form dekorativer Durchgänge bzw. Schlitze über den gesamten Umfang des Gehäuses hinweg aufweist, so dass die Außenwandung des Gehäuses weitestgehend von der Holzkohlekammer temperaturentkoppelt ist, nämlich einerseits aufgrund der Zwischenschaltung der von innen wärmereflektierenden Trägerschale und andererseits aufgrund des Luftraums zwischen der Trägerschale und dem Gehäuse. Auch ist es denkbar, dass der Innenboden gelocht, geschlitzt oder sonst wie durchgängig ausgeführt ist, so dass über den Ventilator auch Luft in den Bereich zwischen der Trägerschale und dem Gehäuse gesaugt oder geblasen werden kann, und von dem Zwischenraum aus dem Bereich unter den Innenboden und von dort aus durch das Lufteinlassrohr in die Holzkohlekammer gelangen kann. Auch diese Maßnahme begünstigt die Kühlung und somit eine unerwünschte Wärmeübertragung auf das Gehäuse.

In Bezug auf den Einsatz, insbesondere in Bezug auf dessen sichere Positionierung, ist es von besonderem Vorteil, wenn der Einsatz und/oder die Trägerschale und/oder das Gehäuse zum Auflegen und/oder Einlegen auf den oberen Rand der Trägerschale und/oder das Gehäuse einen ringförmig umlaufenden flachen Rand aufweisen. Ein Einstecken des Einsatzes in Öffnungen im oberen Randbereich der Trägerschale oder des Gehäuses ist ebenfalls denkbar. Eine weitere Sicherheitsmaßnahme ist so geschaffen.

In Bezug auf die Sicherung des Einsatzes ist weiterhin von besonderem Vorteil, wenn der Einsatz klemmend am oberen Rand des Gehäuses und/oder der Trägerschale festlegbar und/oder einsteckbar ist. Vorzugsweise sind hierzu Spannmittel an der Außenseite des Gehäuses, nahe des oberen Randes des Gehäuses, angeordnet. Diese sind vorzugsweise aus Metall ausgeführt. Bei den Spannmitteln kann es sich um Spannklammern oder dergleichen handeln, wodurch ein sicheres Festlegen des Einsatzes möglich ist. Wie bereits zuvor ausgeführt, kann beim Festspannen des Einsatzes dieser eine klemmende Wirkung auf den Deckel der Holzkohlekammer oder auf die Holzkohlekammer direkt ausüben, so dass die Holzkohlekammer wirksam zwischen der Trägerschale und dem Einsatz festgelegt ist.

In weiter vorteilhafter Weise ist die Konstruktion des Gehäuses und/oder der Trägerschale und/oder der Brennkammer, insbesondere deren Auflageflächen, derart ausgeführt, dass der Einsatz durch einen Grillrost, insbesondere einem nach WO 2014/094745, austauschbar ist.

Von besonderem Vorteil ist es des Weiteren, dass der Grillaufsatz vorzugsweise eine nach außen abfallende Grillfläche aufweist, die im Durchmesser zumindest geringfügig größer ist als der Durchmesser des Schachtes. Dadurch kann Flüssigkeit, die beim Grillen entsteht, in das ringförmige Becken ablaufen. Wird im Becken eine Flüssigkeit, bspw. eine Brühe, gekocht, kann dies den Geschmack positiv beeinflussen. Der Grillaufsatz kann teilweise oder vollständig geschlossen und vorzugsweise gewellt ausgeführt sein. Ist der Durchmesser einer geschlossenen Oberfläche des Grillaufsatzes zumindest geringfügig größer als der Durchmesser des Schachtes, kann ein Auftropfen von Fett und anderen Flüssigkeiten auf die Brennkammer bzw. den Deckel der Brennkammer weitestgehend vermieden werden. Tropfendes Fett und andere Flüssigkeiten sowie Lebensmittel fallen somit seitlich neben den Grillaufsatz in das Becken. Ist dies nicht erwünscht, ist es ebenso denkbar, dass der Grillaufsatz einen nach außen sich erhebenden Topfrand oder zumindest eine Topfnase aufweist, der Fett und/oder andere Flüssigkeiten auffängt.

Zur sicheren Positionierung des Grillaufsatzes ist es von Vorteil, wenn der Grillaufsatz mindestens drei abgewinkelte Füße zur Auflage auf dem Schacht und/oder der Brennkammer und/oder dem Deckel der Brennkammer aufweist. Hierbei kann der Grillaufsatz mit oder ohne Beabstandung zum Schacht angeordnet sein. Auch kann der Grillaufsatz als Deckel der Brennkammer dienen.

In weiter vorteilhafter Weise ist ein Deckel zur zumindest teilweisen Abdeckung des Einsatzes vorgesehen. Dieser kann ein Garen und/oder ein Warmhalten der Speisen begünstigen und ein Spritzen während des Kochens und/oder Grillens vermeiden. Auch für den Transport der Vorrichtung trägt ein Deckel zur weiteren Sicherheit bei, kann bspw. vor dem Auslaufen und/oder Herausfallen von Lebensmitteln aus dem Einsatz während dem Transport oder Positionierung der Vorrichtung dienen. Der Deckel kann dabei vorzugsweise schließbare Ausnehmungen oder Öffnungen aufweisen. Auch ist es denkbar, den Deckel derart bereichsweise zu öffnen, dass. nur das Becken oder nur die Grillfläche abgedeckt ist. Des Weiteren kann der Deckel einen Griff zur besseren Handhabung und/oder zum Öffnen und Verschließen von Ausnehmungen aufweisen. Der Deckel umfasst des Weiteren vorzugsweise eine umlaufende Nut zum Aufsetzen auf den Einsatz und kann klemmend am Rand des Einsatzes und/oder des Gehäuses und/oder der Trägerschale festgelegt werden, vorzugsweise mittels Spannmitteln. Bei den Spannmitteln kann es sich um dieselben zur Befestigung des Einsatzes handeln. Hierdurch ist eine weitere Sicherheitsmaßnahme geschaffen.

Das Gehäuse besteht in vorteilhafter Weise im Wesentlichen aus Metall, wobei der Bodenbereich unterhalb des Innenbodens ohne Weiteres auch aus Kunststoff hergestellt sein kann. Beide Bereiche können miteinander verpresst, verschraubt, verklebt oder sonstwie miteinander verbunden sein. Auch ist es denkbar, das metallische Gehäuse zumindest außen durch Pulverbeschichtung bzw. Pulverlackierung zu veredeln. Beliebige Farbgebungen sind denkbar.

Schließlich ist es von Vorteil, die Trägerschale und/oder die Brennkammer und/oder die Anzündschale und/oder den Einsatz und/oder den Deckel des Einsatzes zumindest teilweise aus Metall, insbesondere aus Edelstahl und/oder emailliertem Schwarzblech herzustellen, nämlich zur Realisierung einer Langlebigkeit und zum Zwecke der einfachen Reinigung, möglichst in einer Geschirrspülmaschine. Insbesondere die Grillauflage kann aus Gusseisen oder emailliertem Blech hergestellt sein.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel einer erfindungsgemäßen Vorrichtung, wobei alle wesentlichen Bauteile gezeigt sind,
- Fig. 2: in einer schematischen Ansicht den Gegenstand aus Fig. 1,
- Fig. 3: in einer schematischen Ansicht den Einsatz des Gegenstands aus den Fig. 1 und 2,
- Fig. 4: in einer schematischen Draufsicht den Einsatz des Gegenstands aus den Fig. 1 bis 3,
- Fig. 5: in einer schematischen Ansicht die Grillauflage des Gegenstands aus den Fig. 1 bis 4, und
- Fig. 6: in einer schematischen Ansicht die Unterseite des Grillaufsatzes des Gegenstands aus den Fig. 1 bis 5.

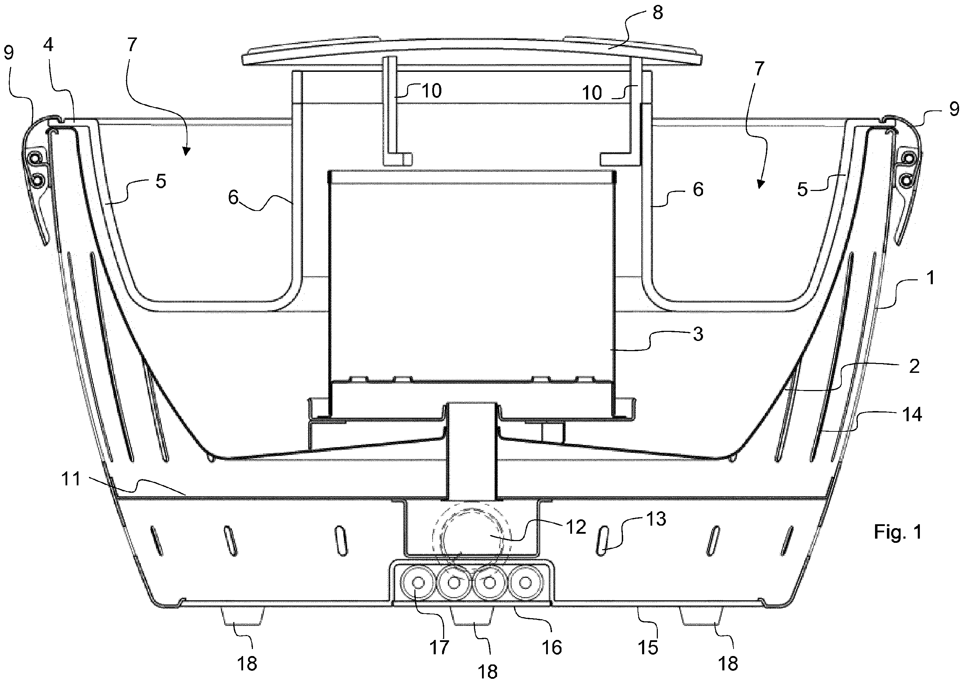

Fig. 1 zeigt in einer schematischen Ansicht die wesentlichen Bauteile der erfindungsgemäßen Vorrichtung, nämlich das Gehäuse 1, die in das Gehäuse 1 einsetzbare Trägerschale 2, die in der Trägerschale 2 angeordnete Holzkohlekammer 3 und den oberhalb der Holzkohlekammer 3 angeordneten Einsatz 4. Der Einsatz 4 bildet durch eine äußere Wand 5 und einen zentralen, nach oben offenen Schacht 6 ein ringförmiges Becken 7 zur Aufnahme von Flüssigkeit und anderen Lebensmitteln und weist einen abnehmbaren Grillaufsatz 8 auf, der oberhalb des Schachtes 6 angeordnet ist.

Die Trägerschale 2 ist innerhalb des Gehäuses 1 allseitig mit Abstand zum Gehäuse 1 angeordnet und ist mit ihrem Randbereich auf den freien Rand des Gehäuses 1 aufgesetzt und dort mittels Spannvorrichtungen 9, die an dem Einsatz 4 angreifen, festgelegt. Der Bodenbereich der Trägerschale 2 fällt zu einem äußeren Randbereich ab, um dort einen Sammelbereich für tropfendes Fett, Flüssigkeiten oder herunterfallende Lebensmittel zu bilden. Die Trägerschale 2 lässt sich schnell und einfach in das Gehäuse einsetzen und wieder herausnehmen, bspw. zur Reinigung in der Spülmaschine.

Der umlaufende Randbereich des Einsatzes 4 ist - wie auch der umlaufende Randbereich der Trägerschale 2 - flach ausgeführt und in das Gehäuse 1 einhängbar. Zur sicheren Positionierung des Einsatzes 4 in das Gehäuse 1 bzw. in die Trägerschale 2 sind am äußeren oberen Rand des Gehäuses 1 Spannklammern 9 angeordnet, die den Einsatz 4, die Trägerschale 2 und das Gehäuse 1 zusammenhalten. Letztendlich handelt es sich bei der Spannvorrichtung 9 um beidseitig angreifende Klammern, die den Einsatz 4 und somit auch die Trägerschale 2 fest mit dem Gehäuse 1 verbinden. Auch denkbar ist es, dass die Spannvorrichtung lediglich Trägerschale 2 und Gehäuse 1 miteinander verbindet.

Der Grillaufsatz 8 weist eine nach außen abfallende Grillfläche auf, die im Durchmesser größer ist als der Durchmesser des Schachtes 6. Die Grillfläche weist nach außen verlaufende Erhebungen auf. Unterhalb des Grillaufsatzes 8 sind abgewinkelte Füße 10 zur Auflage des Grillaufsatzes 8 auf den oberen Rand der Holzkohlekammer 3 angeordnet. Der Grillaufsatz 8 ist zu dem Schacht 6 bzw. der Schachtöffnung beabstandet. Ein Aufliegen auf dem Schacht 8 ist ebenfalls denkbar.

Des Weiteren lässt Fig. 1 erkennen, dass das Gehäuse 1 im unteren Bereich einen Innenboden 11 im Sinne eines Zwischenbodens aufweist, unter dem elektrische Komponenten angeordnet sind. Von außerhalb des Gehäuses 1 ist ein Drehknopf 12 erkennbar, der zum Ein- und Ausschalten sowie zur Regulierung eines unter dem Innenboden 11 angeordneten Gebläses dient.

In der Wandung des Gehäuses 1 sind untere Durchgänge 13 vorgesehen, die zum Ansaugen von Außenluft dienen. Im zusammengebauten Zustand ist zwischen dem Gehäuse 1 und der Trägerschale 2 ein wärmeisolierender Luftraum geschaffen, der über die oberen Durchgänge 14 hinterlüftet ist.

Ein nach unten abschließender Boden des Gehäuses 1 ist mit einer Öffnungsklappe 16 zum Einstecken und Herausnehmen von Batterien 17 ausgestattet. Die Batterien 17 dienen zur Stromversorgung eines in der Zeichnung nicht gezeigten Ventilators, der in einem Ventilatorgehäuse angeordnet ist. Grundsätzlich ist die Drehzahl des Ventilators manuell einstellbar.

Zum Positionieren des Gehäuses 1 sind Füße 18 vorgesehen. Der Boden 15 ist verschraubt oder verrastet, lässt sich jedenfalls vom Gehäuse 1 entfernen bzw. abnehmen.

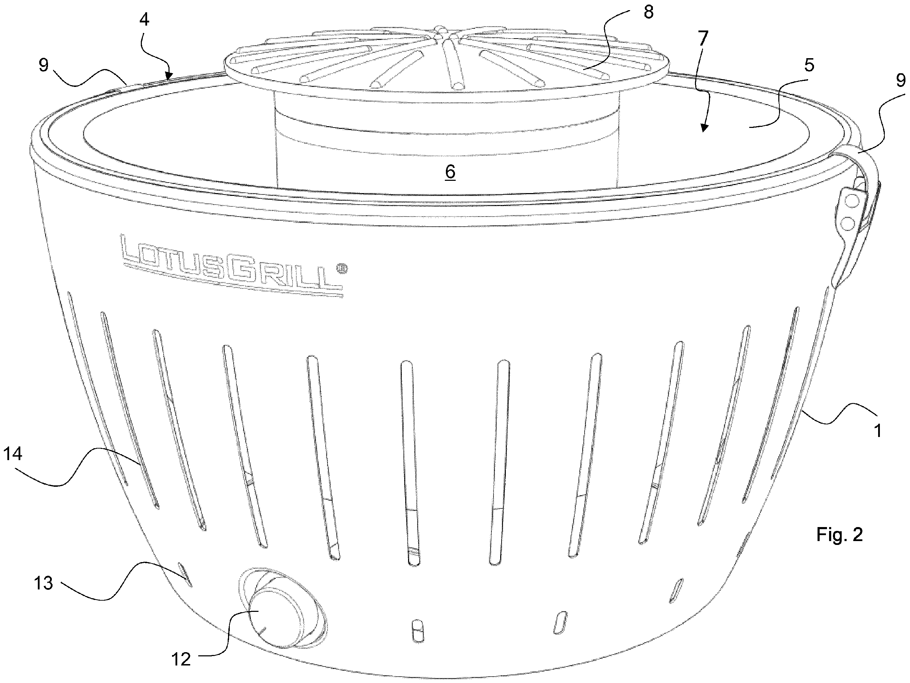

Fig. 2 zeigt eine schematische Außenansicht der erfindungsgemäßen Vorrichtung, im Konkreten das Gehäuse 1 mit im unteren Bereich angeordneten Durchgängen 13 zum Ansaugen von Außenluft und oberen schlitzförmigen Durchgängen 14 zur Hinterlüftung des Raums zwischen der Trägerschale 2 und dem Gehäuse 1, einem im unteren Bereich des Gehäuses 1 angeordneten Drehknopf 12 zur Regelung des Ventilators, einem Einsatz 4 mit durch eine äußere Wand 5 und einem zentralen, nach oben offenen Schacht gebildeten ringförmigen Becken 7 zur Aufnahme von Flüssigkeit und einem abnehmbaren Grillaufsatz 8, der oberhalb des Schachtes 6 angeordnet ist. Der Einsatz 4 ist mittels zweier seitlich am Gehäuse 1 angeordneten Spannklammern 9 fest mit dem Gehäuse 1 verbunden. Die Spannklammern 9 greifen in eine am seitlichen Rand des Einsatzes 4 angeordnete Ringnut ein.

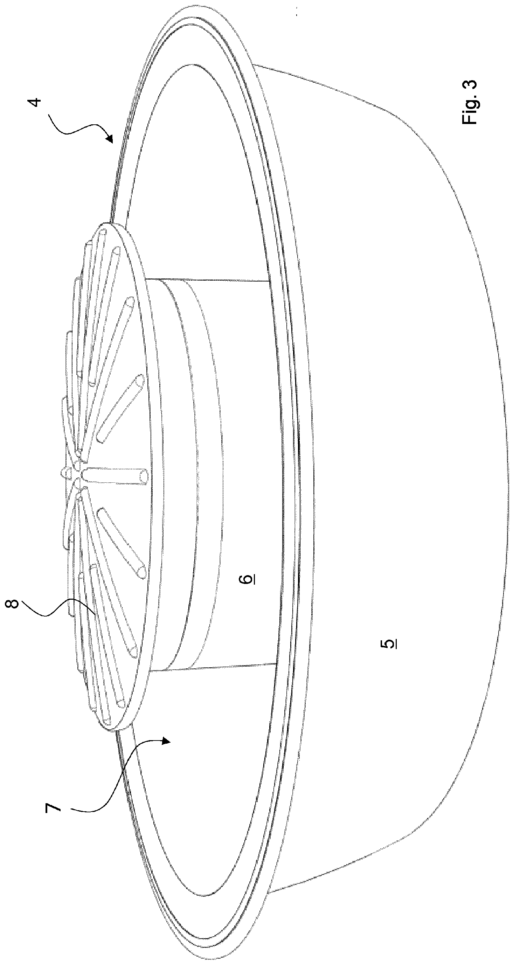

Fig. 3 zeigt den Einsatz 4 der erfindungsgemäßen Vorrichtung mit einer durch eine äußere Wand 5 und einem zentralen, nach oben offenen Schacht 6 gebildeten ringförmigen Becken 7 zur Aufnahme von Flüssigkeiten und einem abnehmbaren Grillaufsatz 8 oberhalb des Schachtes 6.

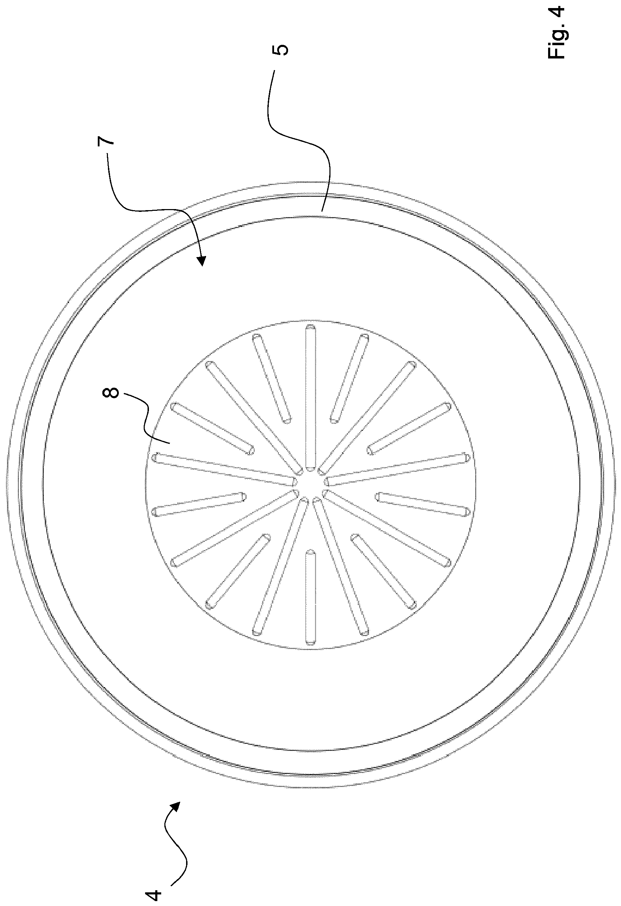

Fig. 4 zeigt eine schematische Draufsicht des erfindungsgemäßen Einsatzes.

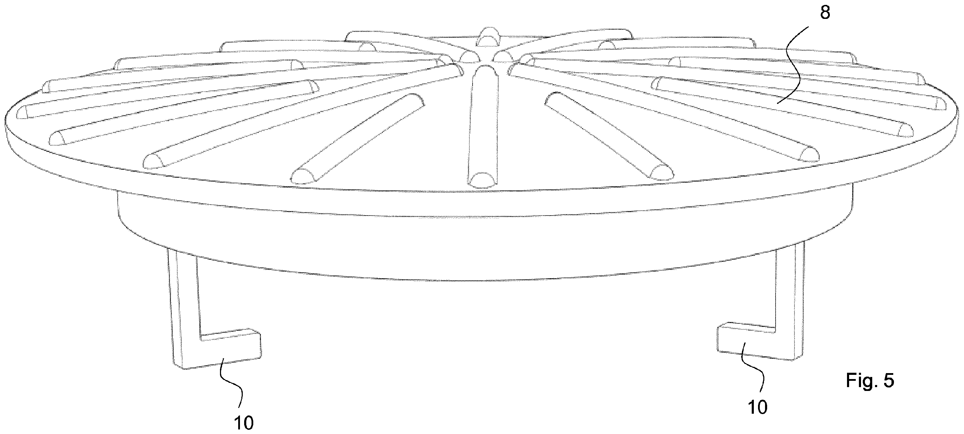

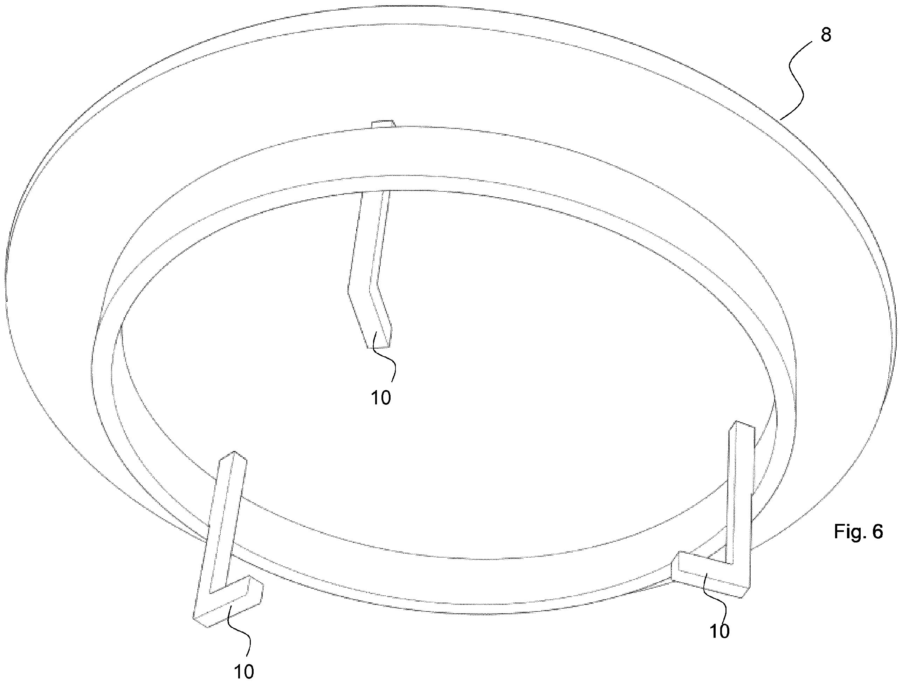

Fig. 5 und Fig. 6 zeigt in einer schematischen Ansicht den erfindungsgemäßen abnehmbaren Grillaufsatz mit einer Grillfläche, wobei die Grillfläche Erhebungen aufweist, die von der Mitte der Grillfläche hin zum äußeren Rand der Grillfläche verlaufen. Die Grillfläche ist nach außen abfallend ausgeführt. Auf der Unterseite des Grillaufsatzes 8 sind drei abgewinkelte Füße 10 zur Auflage auf der Holzkohlekammer 3 angeordnet.

Zur Vermeidung von Wiederholungen sei in Bezug auf Merkmale, die sich den Figuren nicht entnehmen lassen, auf den allgemeinen Teil der Beschreibung verwiesen.

Schließlich sei angemerkt, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Gehäuse
- 2: Trägerschale
- 3: Holzkohlekammer
- 4: Einsatz
- 5: Äußere Wand des Einsatzes
- 6: Schacht
- 7: Becken
- 8: Grillaufsatz
- 9: Spannklammern
- 10: Füße des Grillaufsatzes
- 11: Innenboden
- 12: Drehknopf
- 13: Untere Durchgänge
- 14: Obere Durchgänge
- 15: Boden
- 16: Öffnungsklappe
- 17: Batterien
- 18: Füße des Gehäuses

## Patentansprüche

1. Vorrichtung zum Kochen und/oder Grillen von Lebensmitteln, mit einem Gehäuse, einer in dem Gehäuse angeordneten Brennkammer, einem oberhalb der Brennkammer angeordneten Einsatz, wobei der Einsatz ein durch eine äußere Wand und einen zentralen, vorzugsweise nach oben offenen Schacht gebildetes ringförmiges Becken zur Aufnahme von Flüssigkeit und einen vorzugsweise abnehmbaren, oberhalb des Schachts angeordneten Grillaufsatz aufweist.

2. Vorrichtung nach Anspruch 1, **dadurch gekennzeichnet, dass** eine Trägerschale innerhalb des Gehäuses zwischen Brennkammer und Gehäuse allseitig mit Abstand zum Gehäuse angeordnet ist, vorzugsweise mit einem zumindest teilweise umlaufenden Randbereich in das Gehäuse eingehängt ist und vorzugsweise der Bodenbereich der Trägerschale zu einem äußeren Randbereich abfällt.

3. Vorrichtung nach einem der Ansprüche 1 und 2, **dadurch gekennzeichnet, dass** die Brennkammer als vorzugsweise zylindrisch ausgeführte Holzkohlekammer oder Gaskammer ausgeführt ist und/oder dass die Brennkammer einen abnehmbaren, vorzugsweise gelochten Deckel aufweist, wobei eine Luftversorgungseinrichtung vorgesehen sein kann, die einen in die Brennkammer gerichteten Luftstrom erzeugt.

4. Vorrichtung nach Anspruch 3, **dadurch gekennzeichnet, dass** die Holzkohlekammer mit ihrem unteren Rand in einer Anzündeschale steht, wobei der Raum zwischen dem Boden der Anzündeschale und dem Boden der Brennkammer zum Beladen mit einer vorzugsweise pastösen Anzündhilfe dient, wobei die Anzündschale mindestens drei nach unten abragende Stellfüße umfasst, mit denen sie auf dem Boden des Gehäuses und/oder der Trägerschale steht und wobei im Bodenbereich der Anzündschale, vorzugsweise mittig, ein Lufteinlass zum Einleiten der von der Luftversorgungseinrichtung kommenden Luft vorgesehen ist, wobei der Lufteinlass vorzugsweise mittels eines vom Bodenbereich nach oben abragenden Flanschs, Rands oder dgl. in die Anzündschale hinein ragt.

5. Vorrichtung nach einem der Ansprüche 1 bis 4, **dadurch gekennzeichnet, dass** die Luftversorgungseinrichtung ein von unterhalb eines im Gehäuse ausgebildeten, vorzugsweise in das Gehäuse eingeschweißten Innenbodens durch diesen, vorzugsweise die Trägerschale und den Boden der Anzündschale hindurch führendes Lufteinlassrohr umfasst, auf das vorzugsweise die Trägerschale und die Anzündschale aufgeschoben bzw. aufgesteckt sind.

6. Vorrichtung nach einem der Ansprüche 1 bis 5, **dadurch gekennzeichnet, dass** unterhalb des Innenbodens, nahe des Einlasses des Lufteinlassrohrs, ein Ventilator/Gebläse angeordnet ist, der geregelt Luft in das Lufteinlassrohr bläst, wobei der Ventilator miniaturisiert und mit geringem Stromverbrauch ausgeführt ist, ähnlich oder identisch des Ventilators im Gehäuse eines Computers, und wobei eine Regelung für den Betrieb des Ventilators vorgesehen ist, die den Ventilator bei Erreichen einer vorzugsweise oberhalb des Einsatzes detektierbaren Betriebstemperatur herunterregelt.

7. Vorrichtung nach einem der Ansprüche 1 bis 6, **dadurch gekennzeichnet, dass** unterhalb des Innenbodens des Gehäuses ein Schalter, ein Regler und ein Batteriefach zur Stromversorgung für das Gebläse angeordnet ist, wobei der Schalter und der Regler in der Gehäusewand zum Zwecke der Betätigung von außen sitzt, und wobei das Batteriefach von außen, vorzugsweise von unterhalb des Gehäuses, zugänglich ist.

8. Vorrichtung nach einem der Ansprüche 1 bis 7, **dadurch gekennzeichnet, dass** das Gehäuse im Bereich unterhalb des Innenbodens zur Luftzufuhr dienende Öffnungen, vorzugsweise in Form dekorativer Durchgänge, aufweist und/oder dass das Gehäuse im Bereich oberhalb des Innenbodens zur Kühlung im Bereich zwischen dem Gehäuse und der Trägerschale oder der Brennkammer dienende Öffnungen, vorzugsweise in Form dekorativer Durchgänge, aufweist.

9. Vorrichtung nach einem der Ansprüche 1 bis 8, **dadurch gekennzeichnet, dass** der Einsatz und/oder die Trägerschale und/oder das Gehäuse zur sicheren Positionierung des Einsatzes, insbesondere zum Auflegen des Einsatzes auf den oberen Rand der Trägerschale und/oder des Gehäuses, einen ringförmig umlaufenden flachen Rand aufweist/aufweisen.

10. Vorrichtung nach einem der Ansprüche 1 bis 9, **dadurch gekennzeichnet, dass** der Einsatz klemmend am oberen Rand des Gehäuses und/oder der Trägerschale festlegbar und/oder einsteckbar ist, vorzugsweise mittels Spannmitteln, die an der Außenseite des Gehäuses nahe dessen oberen Randes angeordnet sind.

11. Vorrichtung nach einem der Ansprüche 1 bis 10, **dadurch gekennzeichnet, dass** insbesondere die Auflageflächen und/oder -punkte des Gehäuses und/oder Trägerschale und/oder Brennkammer derart ausgeführt sind, dass der Einsatz durch einen Grillrost austauschbar ist.

12. Vorrichtung nach einem der Ansprüche 1 bis 11, **dadurch gekennzeichnet, dass** der Grillaufsatz eine vorzugsweise nach außen abfallende Grillfläche und/oder vorzugsweise mindestens drei abgewinkelte Füße zur Auflage auf dem Schacht und/oder der Brennkammer und/oder dem Deckel der Brennkammer aufweist, wobei die Grillfläche im Durchmesser zumindest geringfügig größer ist als der Durchmesser des Schachts,

13. Vorrichtung nach einem der Ansprüche 1 bis 12, **dadurch gekennzeichnet, dass** ein Deckel zur zumindest teilweisen Abdeckung des Einsatzes vorgesehen ist, der vorzugsweise Ausnehmungen, einen Griff und/oder eine umlaufende Nut zum Aufsetzen auf den Einsatz aufweist und vorzugsweise klemmend am Rand des Einsatzes und/oder des Gehäuses und/oder der Trägerschale festlegbar ist, vorzugsweise mittels Spannmitteln.

14. Vorrichtung nach einem der Ansprüche 1 bis 13, **dadurch gekennzeichnet, dass** das Gehäuse im Wesentlichen aus Metall, ggf. im Bodenbereich unterhalb des Innenbodens aus Kunststoff, besteht, wobei das metallische Gehäuse zumindest außen Pulverbeschichtet bzw. Pulverlackiert sein kann und/oder dass die Trägerschale und/oder die Brennkammer und/oder die Anzündschale und/oder der Einsatz und/oder die Grillauflage und/oder der Deckel des Einsatzes zumindest teilweise aus Metall, insbesondere Edelstahl und/oder emailliertes Blech und/oder aus Gusseisen hergestellt ist.

15. Einsatz zur Anordnung in und/oder auf eine Vorrichtung zum Kochen und/oder Grillen von Lebensmitteln mit einem Gehäuse und einer in dem Gehäuse angeordneten Brennkammer, wobei der Einsatz oberhalb der Brennkammer angeordneten ist, ein durch eine äußere Wand und einen zentralen, vorzugsweise nach oben offenen Schacht gebildetes ringförmiges Becken zur Aufnahme von Flüssigkeit und einen vorzugsweise abnehmbaren, oberhalb des Schachts angeordneten Grillaufsatz aufweist, insbesondere für eine Vorrichtung nach einem der Ansprüche 1 bis 14.
